# EUROPÄISCHE PATENTSCHRIFT

(11) **EP 1 202 212 B1**
(45) Veröffentlichungstag und Bekanntmachung des Hinweises auf die Patenterteilung: **09.02.2005**
(21) Anmeldenummer: 00123191.9
(22) Anmeldetag: 26.10.2000
(51) Int. Cl.: G06K 9/03, G06K 9/20

(54) **Verfahren zur Erfassung des vollständigen Datensatzes mit Schriftzeichen versehener Formulare**
Method for acquisition of the whole dataset from forms containing handwritten characters
Méthode pour l'acquisition de tout le jeu de données de formulaires contenant des caractères manuscripts

(43) Veröffentlichungstag der Anmeldung: 02.05.2002
(73) Patentinhaber: Wettstein, Mathias, 40699 Erkrath (DE)
(72) Erfinder: Wettstein, Mathias, 40699 Erkrath (DE)
(74) Vertreter: Christophersen, Ruth

(56) Entgegenhaltungen:
- EP-A- 0 565 912
- EP-A- 0 655 702
- US-A- 5 193 121

## Beschreibung

Die Erfindung betrifft ein Verfahren zur Erfassung des vollständigen Datensatzes mit Schriftzeichen versehener Formulare, deren Formularlayout mehrere voneinander getrennte Datenfelder enthält, deren räumliche Position innerhalb des Formularlayouts für alle Formulare einheitlich ist.

Bei der Bearbeitung von Schriftstücken und insbesondere Formularen stellt sich häufig die Aufgabe, das von Hand geschriebene Wort oder Zeichen in Computersprache zu übersetzen. Dazu wird das betreffende Schriftstück mittels eines Scanners in elektronische Bilder in Form von Bilddaten verwandelt. Mittels einer geeigneten Bilderfassungssoftware wird versucht, diese Bilddaten in Computerzeichen zu übersetzen, um schließlich über die Computerzeichen den hinter den geschriebenen Wörtern oder Zeichen stehenden Inhalt zu ermitteln. Die Zuverlässigkeit bei der Erfassung der Schriftzeichen ist sehr stark von der Beschriftungsqualität sowie der Bildqualität des zu erfassenden Schriftstückes abhängig. Einflußgröße ist zunächst die Beschriftungsqualität, etwa die Qualität einer von Hand gezogenen Schrift oder auch einer z. B. mittels einer Schreibmaschine erzeugten Maschinenschrift. Von Einfluß ist ferner die Bildschärfe, d. h. die Trennung zwischen den einzelnen Schriftzeichen und dem in der Regel hellen Bildhintergrund, ferner die Umsetzungsqualität von Graustufen in schwarz/weiß sowie nicht zuletzt eine etwaige Verschmutzung der Vorlage. Alle diese Faktoren können dafür eine Rolle spielen, ob mittels des Zeichenerkennungsprogramms ein Zeichen erkannt oder nicht erkannt wird. Eine Steigerung des Nichterkennens ist hierbei das falsche Erkennen. Es wird aus einem vermeintlich erkannten Zeichen ein unsinniges Zeichen interpretiert.

Bei der umfangreichen Erfassung handbeschriebener Formulare, wie sie zum Beispiel typisch für die Bearbeitung von medizinischen Rezepten ist, entstehen durch nicht oder fehlerhaft erkannte Schriftzeichen beträchtliche Aufwendungen für die Nacherfassung, d. h. die manuelle Erfassung jener Formulare, die mittels des Zeichenerkennungsprogramms nicht oder unvollständig erfaßt werden konnten. Dies betrifft vor allem auch Formulare, die in nicht-segmentierter Schrift ausgefüllt sind, d. h. in Schreibschrift.

Der Erfindung liegt daher die Aufgabe zugrunde, ein Verfahren zu entwickeln, mit dem sich eine preiswerte Nacherfassung der mittels eines Zeichenerkennungsprogramms inhaltlich nicht ausreichend identifizierbaren Formulare ermöglichen läßt, wobei im Rahmen der Nacherfassung die Vertraulichkeit der in den Formularen enthaltenen Informationen gewährleistet sein soll. Ein Verfahren zur lösung dieser Aufgabe ist aus EP-A-0 565 912 bekannt. Zur alternativen **Lösung** dieser Aufgabe wird ein Verfahren der eingangs genannten Art vorgeschlagen, welches durch die folgenden Schritte gekennzeichnet ist:
a) Erstellen einer Abbildung des Formulars und Abspeicherung der Bilddaten der einzelnen Datenfelder;
b) anhand der Bilddaten der Datenfelder und mittels eines Zeichenerkennungsprogramms Identifizierung der in den Datenfeldern enthaltenen Schriftzeichen, soweit diese mit einem vorgegebenen Grad an Sicherheit identifizierbar sind;
c) Bestimmung der nicht identifizierten Datenfelder, d. h. jener Datenfelder des Formulars, deren Schriftzeichen nicht oder nicht mit dem vorgegebenen Grad an Sicherheit identifiziert werden konnten;
d) Verbindung der Bilddaten jedes nicht identifizierten Datenfeldes mit einer diesem Datenfeld zugewiesenen Referenzgröße zu einem abzuarbeitenden Transfer-Datensatz;
e) Datenübermittlung des abzuarbeitenden Transfer-Datensatzes an eine externe Auswertestelle, vorzugsweise mittels eines globalen Datennetzes;
f) in der externen Auswertestelle vollständige Identifizierung der Schriftzeichen des nicht identifizierten Datenfeldes anhand der Bilddaten des abzuarbeitenden Transfer-Datensatzes und Zusammenstellung zu einem Schriftzeichen-Datensatz;
g) Zusammenstellung des Schriftzeichen-Datensatzes mit der Referenzgröße des betreffenden Datenfeldes zu einem abgearbeiteten Transfer-Datensatz;
h) Rückübermittlung des abgearbeiteten Transfer-Datensatzes und
i) anhand der Referenzgröße des rückübermittelten Transfer-Datensatzes Verbindung des Schriftzeichen-Datensatzes mit den übrigen, das selbe Formular betreffenden Datenfeldem zu dem vollständigen Datensatz.

Diese Lösung unterscheicht sich von der aus EP-A-0 565 912 dadurch, daß für jedes nicht indentifizierte Datenfeld ein Transfer-Datensatz erstellt wird und daß dieser Bilddaten enthält.

Vorzugsweise werden als Bilddaten sowohl schwarz/weiß-Bilddaten, als auch Kontrastwerte abgespeichert, wobei die in dem abzuarbeitenden Transfer-Datensatz enthaltenen Bilddaten Kontrastwerte-Bilddaten sind. Vorzugsweise sind ferner die von dem Zeichenerkennungsprogramm verarbeiteten Bilddaten schwarz/weiß-Bilddaten.

Das erfindungsgemäße Verfahren zeichnet sich durch einen geringen Aufwand zur Nacherfassung solcher Formulare aus, deren Beschriftung mittels des computergestützten Zeichenerkennungsprogramms nicht oder nicht ausreichend sicher identifizierbar ist. Hierzu erfolgt erfindungsgemäß bei solchen Formularen, deren Schriftzeichen nicht oder nicht mit einem vorgegebenen Grad an Sicherheit identifiziert werden konnten, eine Aufteilung in einerseits Datenfelder, deren Inhalt bereits erkannt werden konnte, und andererseits Datenfelder, deren Inhalt noch nicht erkannt werden konnte. Die vorher abgespeicherten Bilddaten jener Datenfelder, deren Inhalt noch nicht erkannt werden konnte, werden mit einer diesem Datenfeld zugewiesenen Referenzgröße zu einem Transfer-Datensatz verknüpft. Nur dieser Transfer-Datensatz wird an eine externe Auswertestelle übermittelt, in der dann durch einen von einer Person vorgenommenen optischen Vergleich die vollständige Identifizierung des bis dahin nicht identifizierten Datenfeldes erfolgt, und zwar anhand der in dem übermittelten Transfer-Datensatz enthaltenen Bilddaten des jeweiligen Datenfeldes. Anschließend wird der so erstellte Schriftzeichen-Datensatz zusammen mit der Referenzgröße als nunmehr vollständiger Transfer-Datensatz rückübermittelt, wobei bei dieser Rückübermittlung ebenso wie bei der vorherigen Übermittlung an die externe Auswertestelle auf die Informationswege des globalen Datennetzes, insbesondere des Internets, zurückgegriffen werden kann.

Bei dem erfindungsgemäßen Verfahren wird daher auf eine vollständige Nacherfassung sämtlicher maschinell nicht identifizierbarer Formulare zu Gunsten einer ausschließlichen Nacherfassung einzelner Datenfelder verzichtet. Dies führt zu einem deutlich reduzierten personellen und damit auch finanziellen Aufwand für die Nacherfassung. Ein weiterer Vorteil besteht darin, daß bei den Nacherfassungen von der jeweiligen Person lediglich vereinzelte Datenfelder geprüft und hinsichtlich ihrer Schriftzeichen identifiziert werden. Eine Verknüpfung zu anderen Datenfeldern des selben Formulars ist der nacherfassenden Person hierbei nicht möglich, so daß ein Höchstmaß an Vertraulichkeit der auf den Formularen enthaltenen Informationen sichergestellt ist. Dies ist von besonderer Bedeutung bei der Erfassung von Rezeptformularen mit darauf enthaltenen, patientenbezogenen Daten.

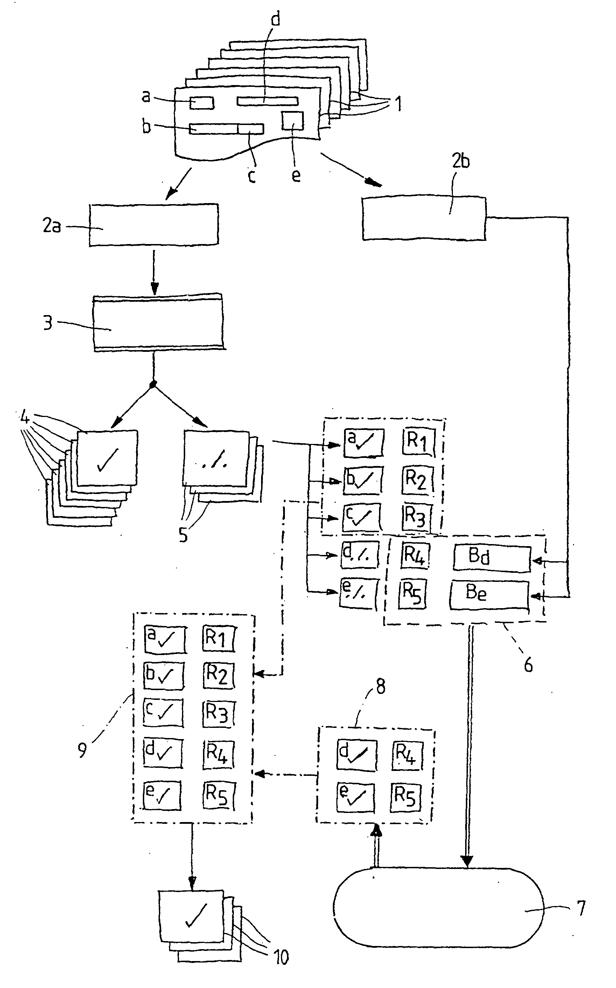

Einzelheiten des Verfahrens werden nachfolgend anhand eines Ausführungsbeispieles und unter Bezugnahme auf die anliegende Zeichnung erläutert. Dargestellt ist auf der Zeichnung in schematischer Form ein Verfahren zur Erfassung des vollständigen Datensatzes von mit Schriftzeichen versehenen Formularen.

Die Formulare 1, bei denen es sich z. B. um Rezepte mit darauf handschriftlich notierten ärztlichen Verordnungen handeln kann, weisen mehrere Datenfelder a, b, c, d, e auf. Die räumliche Position dieser Datenfelder innerhalb des Formularlayouts ist für alle Formulare 1 einheitlich. In den Datenfeldem a, b, c, d, e eingetragen sein können z. B. die ärztliche Verordnung, der Name des Patienten, eine Kennziffer zur Identifizierung seiner Krankenversicherung, etc.

Die Beschriftung derartiger Formulare 1 z. B. durch den behandelnden Arzt erfolgt in der Regel nicht mit Schreibmaschine oder in anderer normierter Type, sondern von Hand. Dieser Umstand erfordert, sollen die Datenfelder a, b, c, d, e maschinell ausgelesen werden, den Einsatz eines entsprechend intelligenten Zeichenerkennungsprogramms. Zur Erfassung des Inhalts der Datenfelder der einzelnen Formulare werden diese zunächst mittels einer Bilderfassung einzeln abgebildet, und die hierbei erzeugten Bilddaten abgespeichert. Hierzu kommt ein üblicher Scanner zur Anwendung. Von Bedeutung ist, daß die Bilderfassung aufgeteilt ist in eine Bilderfassung schwarz/weiß 2a und eine Bilderfassung in einzelnen Kontrastwerten 2b, also z. B. Grauwerten oder vielstufigen Farbwerten, die bei der späteren Auswertung auch elektronisch nach Farbverschiebungen filterbar sind.

Die aufgrund der Bilderfassung schwarz/weiß 2a erzeugten Bilddaten des jeweiligen Formulars werden mittels eines Zeichenerkennungsprogramms 3 (im Englischen: ICR, Intelligent Character Recognition) ausgewertet. In den meisten Fällen, d. h. bei der überwiegenden Anzahl der Formulare 1, wird das Zeichenerkennungsprogramm 3 in der Lage sein, die Schriftzeichen auf sämtlichen Datenfeldern a, b, c, d, e zu erkennen, so daß anschließend die Auswertung dieser Daten erfolgen kann. Entsprechend liegen in diesen überwiegend auftretenden Fällen anschließend vollständig erkannte Datensätze 4 vor.

Mittels des Zeichenerkennungsprogramms 3 lassen sich jedoch nicht alle Formulare lückenlos auslesen. Es bleibt ein Restbestand an nicht oder unvollständig erkannten Datensätzen 5. Die Ursachen dieses Nichterkennens von Datenfeldern einzelner Formulare können sehr vielgestaltig sein. So kann die von der ausfüllenden Person verwendete Schrift unleserlich sein, die Schrift kann verwischt sein, die Schrift kann sich nicht an der dafür vorgesehenen Position innerhalb des Formularlayouts befinden, oder das Formular selbst kann schlicht im Bereich einzelner Datenfelder oder insgesamt verschmutzt sein. In allen Fällen der nicht bzw. unvollständig erkannten Datensätze 5 muß eine Nacherfassung der betreffenden Formulare erfolgen. Hierzu erfolgt in einem nächsten Schritt eine Bestimmung der nicht identifizierten Datenfelder d, e in Abgrenzung von den bereits identifizierten Datenfeldern a, b, c des jeweiligen Datensatzes. Als nicht identifizierte Datenfelder gelten dabei jene Datenfelder, deren Schriftzeichen von dem Zeichenerkennungsprogramm 3 nicht oder nicht mit einem systemintern vorgegebenen Grad an Sicherheit identifiziert werden konnten. Die Bilddaten B_{d}, Bₑ dieser bisher nicht identifizierten Datenfelder d, e werden gemeinsam mit diesen Datenfeldem d, e zugewiesenen Referenzgrößen R₄, R₅ zu einem abzuarbeitenden Transfer-Datensatz 6 zusammengestellt.

Die Vergabe der Referenzgrößen R₄, R₅ des Transfer-Datensatzes 6 erfolgt nach einem Verschlüsselungsprinzip, um sicherzustellen, daß für einen Außenstehenden aus der Verbindung der Bilddaten B_{d}, Bₑ mit den entsprechenden Referenzgrößen R₄, R₅ keine Rückschlüsse auf den Inhaber bzw. die Bezugsperson dieser Daten möglich sind. Auf diese Weise wird eine größt mögliche Datensicherheit erreicht, da der Transfer-Datensatz 6 für sich alleine nur wenig Aussagekraft hat.

Der abzuarbeitende Transfer-Datensatz 6 wird mittels des Internets oder eines anderen globalen Datennetzes im Datenaustausch von einer externen Auswertestelle 7 abgerufen. Bei der externen Auswertestelle 7 handelt es sich z. B. um einen externen Dienstleister, der für den Betreiber des Verfahrens gegen Bezahlung Nacherfassungs-Dienstleistungen durchführt. Anhand der Bilddaten B_{d}, Bₑ des Transfer-Datensatzes 6 wird in der externen Auswertestelle von einer in dem Erkennen von Schriftzeichen erfahrenen Person der Bilddatensatz, d. h. das Bild des bisher noch nicht erfaßten Datenfeldes, überprüft mit dem Ergebnis, daß in den allermeisten Fällen die darauf enthaltenen Schriftzeichen identifiziert werden können. Um diese Identifizierung zu erleichtern, liegen den Bilddaten B_{d}, Bₑ des Transfer-Datensatzes 6 die Daten der Grauwerte-Bilderfassung 2b zugrunde. Es hat sich gezeigt, daß schwer leserliche Schriftzeichen anhand von Facsimile-Abbildungen in Grauwertestufen besser identifizierbar sind, als anhand einer schwarz/weiß-Abbildung. Anstelle der Grauwerte können auch Farbwerte herangezogen werden. Diese lassen sich z. B. elektronisch filtern, um so z. B. farbige Hintergrundstrukturen auswertetechnisch zu unterdrücken.

Die in der externen Datenauswertestelle 7 anhand der Grauwerte-Bilddaten identifizierten Datenfelder d, e werden als Schriftzeichen-Datensatz gemeinsam mit den zugehörigen Referenzgrößen R₄, R₅ als abgearbeiteter Transfer-Datensatz 8 wieder rückübermittelt, wobei auch diese Rückübermittlung auf den Datenleitungen des Internets oder eines anderen globalen Datennetzes erfolgt.

Die Informationen des abgearbeiteten Transfer-Datensatzes 8 werden gemeinsam mit den bereits vorher vollständig erfaßten Informationen der Datenfelder a, b, c zu einem dann vollständigen Satz von Datenfeldern a, b, c, d, e zusammengefaßt. Auf der Zeichnung ist die Zusammenfassung der Datenfelder mit dem Bezugszeichen 9 versehen. Ordnungskriterium bei der Zusammenfassung sind die den jeweiligen Datenfeldern zugeordneten Referenzgrößen, wobei nicht nur die vormals nicht identifizierten Datenfelder d, e, sondern auch die bereits mittels des Zeichenerkennungsprogramms 3 erkannten Datenfelder a, b, c eine jeweils individuelle Referenzgröße R₄, R₅ bzw. R₁, R₂, R₃ führen. Damit liegen dann im Ergebnis vollständig erkannte Datensätze 10 vor, die dann der weiteren Auswertung unterzogen werden können.

### Bezugszeichenliste

- 1: Formular
- 2a: Bilderfassung schwarz/weiß
- 2b: Bilderfassung in Grauwerten
- 3: Zeichenerkennungsprogramm (ICR)
- 4: vollständig erkannte Datensätze
- 5: nicht oder unvollständig erkannte Datensätze
- 6: Transfer-Datensatz
- 7: externe Auswertestelle
- 8: abgearbeiteter Transfer-Datensatz
- 9: zusammengefaßte Datenfelder
- 10: vollständig erkannte Datensätze
- a: Datenfeld
- b: Datenfeld
- c: Datenfeld
- d: Datenfeld
- e: Datenfeld
- B_{d}: Bilddaten
- Bₑ: Bilddaten
- R₁: Referenzgröße
- R₂: Referenzgröße
- R₃: Referenzgröße
- R₄: Referenzgröße
- R₅: Referenzgröße

## Patentansprüche

1. Verfahren zur Erfassung des vollständigen Datensatzes mit Schriftzeichen versehener Formulare, deren Formularlayout mehrere voneinander getrennte Datenfelder (a, b, c, d, e) enthält, deren räumliche Position innerhalb des Formularlayouts für alle Formulare (1) einheitlich ist, mit den folgenden Schritten:
a) Erstellen einer Abbildung des Formulares (1) und Abspeicherung der Bilddaten der einzelnen Datenfelder (a, b, c, d, e);
b) anhand der Bilddaten der Datenfelder und mittels eines Zeichenerkennungsprogramms (3) Identifizierung der in den Datenfeldern (a, b, c, d, e) enthaltenen Schriftzeichen, soweit diese mit einem vorgegebenen Grad an Sicherheit identifizierbar sind;
c) Bestimmung der nicht identifizierten Datenfelder (d, e), d. h. jener Datenfelder des Formulars, deren Schriftzeichen nicht oder nicht mit dem vorgegebenen Grad an Sicherheit identifiziert werden konnten;
d) Verbindung der Bilddaten (B_{d}, Bₑ) jedes nicht identifizierten Datenfeldes (d, e) mit einer diesem Datenfeld (d, e) zugewiesenen Referenzgröße (R₄, R₅) zu einem abzuarbeitenden Transfer-Datensatz (6);
e) Datenübermittlung des abzuarbeitenden Transfer-Datensatzes (6) an eine externe Auswertestelle (7), vorzugsweise mittels eines globalen Datennetzes;
f) in der externen Auswertestelle (7) vollständige Identifizierung der Schriftzeichen des nicht identifizierten Datenfeldes (d, e) anhand der Bilddaten (B_{d}, Bₑ) des abzuarbeitenden Transfer-Datensatzes und Zusammenstellung zu einem Schriftzeichen-Datensatz;
g) Zusammenstellung des Schriftzeichen-Datensatzes mit der Referenzgröße (R₄, R₅) des betreffenden Datenfeldes (d, e) zu einem abgearbeiteten Transfer-Datensatz (8);
h) Rückübermittlung des abgearbeiteten Transfer-Datensatzes (8) und
i) anhand der Referenzgröße (R₄, R₅) des rückübermittelten Transfer-Datensatzes (8) Verbindung des Schriftzeichen-Datensatzes mit den übrigen, das selbe Formular betreffenden Datenfeldem zu dem vollständigen Datensatz (10).

2. Verfahren nach Anspruch 1, **dadurch gekennzeichnet, daß** als Bilddaten sowohl schwarz/weiß-Bilddaten als auch Kontrastwerte abgespeichert werden, und daß die in dem abzuarbeitenden Transfer-Datensatz (6) enthaltenen Bilddaten Kontrastwerte-Bilddaten sind.

3. Verfahren nach Anspruch 1 oder Anspruch 2, **dadurch gekennzeichnet, daß** die von dem Zeichenerkennungsprogramm (3) verarbeiteten Bilddaten schwarz/weiß-Bilddaten sind.

## Claims

1. Method for capturing the complete data set of forms provided with graphic characters, the form layout of which forms contains a number of separate data fields (a, b, c, d, e), the spatial position of which within the form layout is identical for all of the forms (1), the method comprising the following steps:
a) producing an image of the form (1) and storing the image data of the individual data fields (a, b, c, d, e);
b) based on the image data of the data fields, and aided by a character recognition program (3), identifying the graphic characters contained in the data fields (a, b, c, d, e) inasmuch as the graphic characters are identifiable with a predetermined degree of certainty;
c) determining the unidentified data fields (d, e), that is to say those data fields of the form where graphic characters could not be identified at all or could not be identified with the predetermined degree of certainty;
d) correlating the image data (B_{d}, Bₑ) of each unidentified data field (d, e) with a reference parameter (R₄, R₅) assigned to this data field (d, e) to generate a transfer data set (6) to be processed;
e) transmitting the data of the transfer data set (6) to be processed to an external evaluation station (7), preferably by means of a global data network;
f) in the external evaluation station (7), fully identifying the graphic characters of the unidentified data field (d, ₑ) based on the image data (B_{d}, Bₑ) of the transfer data set to be processed and combining them to generate a graphic character data set;
g) compiling the graphic character data set with the reference parameter (R₄, R₅) of the corresponding data field (d, e) to generate a processed transfer data set (8);
h) returning the processed transfer data set (8); and
i) based on the reference parameter (R₄, R₅) of the returned transfer data set (8), correlating the graphic character data set with the other data fields of the same form to generate the complete data set (10).

2. Method according to Claim 1, **characterized in that** both black/white image data and contrast values are stored as image data, and **in that** the image data contained in the transfer data set (6) to be processed are contrast value image data.

3. Method according to Claim 1 or Claim 2, **characterized in that** the image data processed by the character recognition program (3) are black/white image data.

## Revendications

1. Procédé pour l'acquisition de tout le jeu de données de formulaires contenant des caractères manuscrits, dont la présentation de formulaire contient plusieurs champs de données (a, b, c, d, e) séparés les uns des autres, dont la position spatiale à l'intérieur de la présentation de formulaire est unitaire pour tous les formulaires (1), avec les étapes suivantes :
a) création d'une représentation du formulaire (1) et enregistrement des données d'image des différents champs de données (a, b, c, d, e) ;
b) à l'aide des données d'image des champs de données et au moyen d'un programme de reconnaissance de caractères (3), identification des caractères contenus dans les champs de données (a, b, c, d,e), tant que ceux-ci sont identifiables avec un degré prescrit de certitude ;
c) détermination des champs de données non identifiés (d, e), c'est à dire des champs de données du formulaire dont les caractères n'ont pas pu être identifiés ou n'ont pas pu être identifiés avec le degré prescrit de certitude ;
d) association des données d'image (B_{d}, Bₑ) de chaque champ de données non identifié (d, e) avec une grandeur de référence (R₄, R₅) attribuée à ce champ de données (d, e) pour un jeu de données de transfert (6) à dérouler.
e) transmission de données du jeu de données de transfert (6) à dérouler à un poste d'évaluation externe (7), de préférence au moyen d'un réseau global de données ;
f) dans le poste d'évaluation externe (7), identification complète des caractères du champ de données (d, e) non identifiés à l'aide des données d'image (B_{d}, Bₑ) du jeu de données de transfert à dérouler et regroupement vers un jeu de données de caractères ;
g) regroupement du jeu de données de caractères avec la grandeur de référence (R₄, R₅) du champ de données concerné (d, e) vers un jeu de données de transferts déroulé (8) ;
h) transmission en retour du jeu de données de transfert déroulé (8) et
i) à l'aide de la grandeur de référence (R₄, R₅) du jeu de données de transfert transmis en retour (8), association du jeu de données de caractères avec les champs de données restants, concernant le même formulaire pour un jeu de données complet (10).

2. Procédé selon la revendication 1, **caractérisé en ce que** sont enregistrées comme données d'image aussi bien des données d'image en noir et blanc que des valeurs de contraste et **en ce que** les données d'images contenues dans le jeu de données de transfert (6) à dérouler sont des données d'images de valeurs de contraste.

3. Procédé selon la revendication 1 ou 2, **caractérisé en ce que** les données d'images traitées par le programme de reconnaissance de caractères (3) sont des données d'images en noir et blanc.
